# EUROPÄISCHE PATENTANMELDUNG

(11) **EP 1 302 503 A2**
(43) Veröffentlichungstag der Anmeldung: **16.04.2003**
(21) Anmeldenummer: 02292264.5
(22) Anmeldetag: 16.09.2002
(51) Int. Cl.: C08J 7/12, C08J 7/04, G02B 1/04

(54) **Verfahren zum Beschichten eines Formkörpers aus polymerem Material**

(30) Priorität: 09.10.2001 DE 10149834
(71) Anmelder: Nexans, 75008 Paris (FR)
(72) Erfinder: Steinberg, Helmut, Dr.-Ing., 92721 Störnstein (DE); Krauthan, Josef, Dr.-Chem., 95671 Bärnau (DE)
(74) Vertreter: Döring, Roger, Dipl.-Ing.

(57) **Zusammenfassung**

Es wird ein Verfahren zum Beschichten eines langgestreckten Formkörpers (8) aus polymerem Material angegeben, der zur Führung von Licht in Form optischer Signale vorgesehen ist. Dabei wird um den Formkörper (8) herum eine Schicht aus polymerem Material mit gegenüber dem Formkörper (8) niedrigerem Brechungsindex angebracht. Zur Erzeugung der Schicht wird eine Beschichtungsanlage (A) mit mindestens einer Kammer (1) verwendet, welcher ein halogenhaltiges Gas (4) bzw. Gasgemisch zugeführt wird. Das halogenhaltige Gas (4) bzw. Gasgemisch wird in der Kammer (1) unter der Einwirkung von Mikrowellen (5) in ein Plasma (6) umgewandelt und durch eine Düse (7) aus der Kammer (1) herausgeleitet. Der Formkörper (8) wird über seine ganze Länge mindestens einmal im Bereich der Düse (7) bzw. des aus derselben austretenden Plasmas (6) an der Beschichtungsanlage (A) entlang bewegt und dabei mit einer durch das Auftreffen des Plasmas (6) erzeugten Schicht (9) aus einem halogenhaltigen Polymer versehen.

## Beschreibung

Die Erfindung bezieht sich auf ein Verfahren zum Beschichten eines langgestreckten Formkörpers aus polymerem Material, der zur Führung von Licht in Form optischer Signale vorgesehen ist, mit welchem um den Formkörper eine Schicht aus polymerem Material mit gegenüber dem Formkörper niedrigerem Brechungsindex aufgebracht wird (EP 1 052 527 A1).

"Formkörper" im Sinne der Erfindung kann eine Faser aus polymerem Material zur Fortleitung von Licht bzw. von optischen Signalen sein. Bei dem Formkörper kann es sich aber auch um einen als Vorform dienenden Stab handeln, aus dem heraus eine polymere Faser gezogen werden kann. Der Einfachheit halber werden im folgenden nur die polymeren Fasern erwähnt. Sie werden beispielsweise im Automobilbau zur Übertragung optischer Signale eingesetzt. Gegenüber den beispielsweise in der Nachrichtentechnik eingesetzten Glasfasern haben polymere Fasern zwar höhere Verluste. Sie werden beispielsweise wegen ihrer besseren mechanischen Eigenschaften aber gerade im Automobilbau bevorzugt. Damit über eine polymere Faser Licht übertragen werden kann, muß sie in eine Schicht aus geeignetem Material eingebettet werden.

Mit dem Verfahren nach der eingangs erwähnten EP 1 052 527 A1 werden um eine polymere Faser herum eine Schicht aus einem Polymer sowie darüber eine Cladding-Schicht durch Extrusion aufgebracht. Diese Schichten stellen sicher, daß über die Faser Licht über eine größere Strecke übertragen werden kann. Eine so beschichtete Faser hat bestimmte, vom für die Beschichtung verwendeten Material und dessen Schichtdicke abhängige Eigenschaften. Sie können nur durch Einsatz eines anderen Schichtmaterials geändert werden. Eine Anpassung von Fasern an unterschiedliche Übertragungseigenschaften ist daher aufwendig.

Der Erfindung liegt die Aufgabe zugrunde, das eingangs geschilderte Verfahren so zu gestalten, daß auf einfache Weise polymere Fasern mit unterschiedlichen Übertragungseigenschaften erzeugt werden können.

Diese Aufgabe wird gemäß der Erfindung dadurch gelöst,
- daß die Faser in einer Beschichtungsanlage mit mindestens einer Kammer beschichtet wird, welcher ein halogenhaltiges Gas bzw. Gasgemisch zugeführt wird,
- daß das halogenhaltige Gas bzw. Gasgemisch in der Kammer unter der Einwirkung von Mikrowellen in ein Plasma umgewandelt und durch eine Düse aus der Kammer herausgeleitet wird und
- daß die Faser über ihre ganze Länge mindestens einmal im Bereich der Düse bzw. des aus derselben austretenden Plasmas an der Beschichtungsanlage entlang bewegt und dabei mit einer durch das Auftreffen des Plasmas erzeugten Schicht aus einem halogenhaltigen Polymer versehen wird.

Mit diesem Verfahren kann um die polymere Faser herum eine mindestens einlagige Schicht mit auf einfache Weise variabler Schichtdicke erzeugt werden, welche die Führung von Licht ermöglicht. Die Schichtdicke des Beschichtungsmaterials hängt davon ab, wie oft die Faser an der Beschichtungsanlage entlang bewegt wird. Dabei ist es unter Verwendung von zwei oder mehr Kammern der Beschichtungsanlage auf einfache Weise möglich, unterschiedliche Schichten in einem Arbeitsgang nacheinander aufzubringen. Es können so auf einfache Weise sowohl Stufenindexfasern als auch Gradientenfasern hergestellt werden, jeweils auch noch mit variablen, von der Schichtdicke der insgesamt aufgebrachten Schichten abhängigen Eigenschaften. In bevorzugter Ausführungsform wird für die Beschichtung der Faser ein Fluorpolymer verwendet, das einen Brechungsindex von etwa 1,40 hat. Der Brechungsindex eines für die Faser selbst verwendeten polymeren Materials, wie beispielsweise Polymethylmethacrylat, liegt bei etwa 1,49.

Die bei diesem Verfahren eingesetzte Beschichtungsanlage ist an sich bekannt. Sie arbeitet nach dem Atmospheric Pressure Non-Equilibrium Plasma-Verfahren. Eine solche Beschichtungsanlage wird bisher beispielsweise zur Beschichtung von Kunststoffen mit Metallen, wie Titan, oder von Glas, Aluminium und Keramik mit unterschiedlichen Stoffen verwendet, wie Silizium, Zinn, Titan oder Platin. Die Beschichtungsanlage hat eine Kammer, der ein ein Beschichtungsmaterial enthaltendes Gas zugeführt wird. Die Kammer ist in einem Gehäuse angeordnet, in welchem sie mit Mikrowellen bestrahlt wird. In der Kammer wird dadurch ein Plasma erzeugt, das unter Druck über eine Düse aus derselben austritt. Es trifft dann auf einen zu beschichtenden Gegenstand.

Das Verfahren nach der Erfindung wird anhand der Zeichnungen als Ausführungsbeispiel erläutert.

Es zeigen:
Fig. 1 schematisch eine Beschichtungsanlage zur Durchführung des Verfahrens nach der Erfindung.
Fig. 2 eine Einzelheit der Beschichtungsanlage in vergrößerter Darstellung.
Fig. 3 ebenfalls schematisch eine Anordnung zur Herstellung einer hochwertigen polymeren Faser.

Zur Durchführung des Verfahrens nach der Erfindung sind grundsätzlich halogenhaltige Stoffe geeignet. Als besonders günstig haben sich Fluorpolymere als Beschichtungsmaterial herausgestellt. Für die Beschichtung kann daher beispielsweise ein fluoriertes Gas bzw. Gasgemisch verwendet werden, das im folgenden - stellvertretend für alle anderen verwendbaren Stoffe - nur mit der Bezeichnung "Gas" berücksichtigt wird. Die Erfindung wird im folgenden außerdem - ohne Einschränkung der allgemeineren Gültigkeit - auch weiterhin für die Beschichtung einer polymeren Faser erläutert. Das Wort "Formkörper" wird daher der Einfachheit halber durch das Wort "Faser" ersetzt.

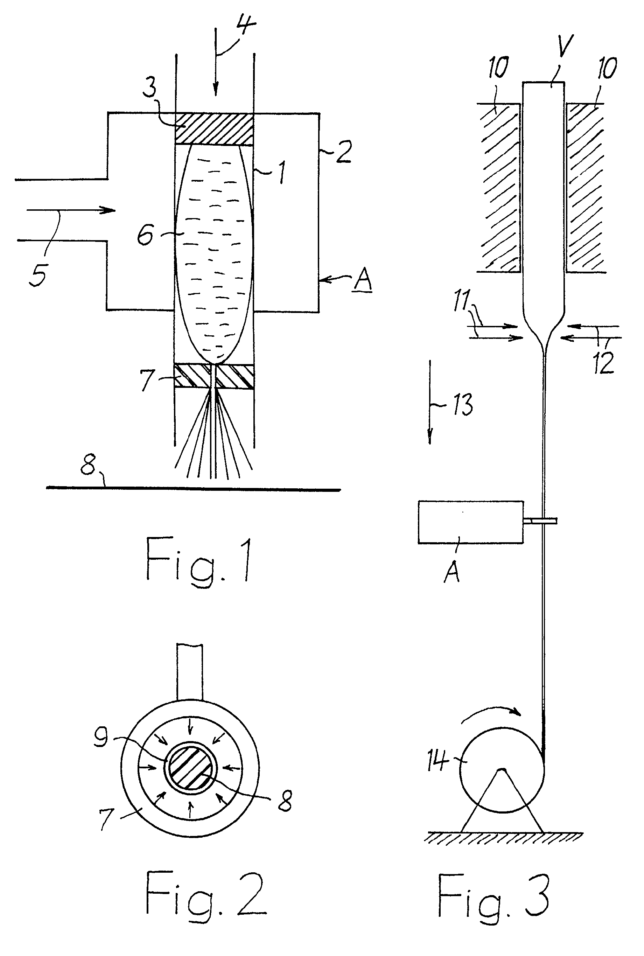

Die in Fig. 1 dargestellte Beschichtungsanlage - im folgenden kurz "Anlage A" genannt - weist eine zentrale Kammer 1 und ein dieselbe unter Einschluß eines Hohlraums umgebendes Gehäuse 2 auf. Die Kammer 1 besteht aus einem durch Mikrowellen nicht anregbaren Material, beispielsweise aus Quarzglas oder Kunststoff. Beim Betrieb der Anlage A wird der Kammer 1 über einen nur in einer Richtung durchlässigen Einlaß 3 ein fluoriertes Gas 4 zugeführt. Das fluorierte Gas 4 wird in der Kammer 1 mit Mikrowellen 5 bestrahlt. Es findet dadurch unter Bildung eines Plasmas 6 eine Umwandlung der im Gas enthaltenen Moleküle in reaktive Zwischenstufen, das sind beispielsweise Radikale oder lonen, statt. Das durch die ständige Zufuhr von fluoriertem Gas 4 unter Druck stehende Plasma 6 verläßt die Kammer 1 durch eine Düse 7. Es trifft dort auf eine polymere Faser 8.

Durch das Auftreffen des fluorhaltigen Plasmas 6 auf das polymere Material der Faser 8 reagiert dasselbe in Kombination bzw. Rekombination mit den Zwischenstufen des Plasmas 6 und es wird eine aus einem Fluorpolymer bestehende Schicht 9 (Fig. 2) auf der Faser 8 erzeugt. Die Schicht 9 hat beispielsweise eine Dicke von etwa 0,5 µm. Es können Schichten 9 mit einer Dicke von 0,1 µm bis 1,0 µm erzeugt werden. Zur Herstellung einer bestimmten Schichtdicke kann die Faser 8 zweimal oder gegebenenfalls auch öfter als zweimal an der Düse 7 entlang bewegt werden.

Die Düse 7 ist zweckmäßig ringförmig ausgeführt, so wie es in Fig. 2 dargestellt ist. Damit kann die Schicht 9 auf einfache Weise rund um die Faser 8 aufgebracht werden. Die Faser 8 wird möglichst zentral durch die Düse 7 hindurch bewegt.

Mit einer nur eine Kammer 1 aufweisenden Beschichtungsanlage A können in einem Arbeitsgang nur gleiche Materialien auf eine Faser 8 aufgebracht werden. Wenn zur Erzielung unterschiedlicher Eigenschaften der beschichteten Fasern 8 Schichten 9 aus unterschiedlichen Materialien aufgebracht werden sollen, kann eine Beschichtungsanlage A mit zwei oder mehr Kammern 1 verwendet werden. In diese Kammern 1 können unterschiedlich dotierte Gase eingeführt werden. Die mindestens zwei Kammern werden im gleichen Arbeitsgang nacheinander von der Faser 8 durchlaufen. Statt einer Beschichtungsanlage A mit zwei oder mehr Kammern 1 könnten auch zwei oder mehr Beschichtungsanlagen A mit jeweils nur einer Kammer 1 hintereinander angeordnet werden.

Das Verfahren nach der Erfindung kann - wie bereits erwähnt - bei einem als Vorform verwendbaren Stab aus polymerem Material eingesetzt werden. In bevorzugter Ausführungsform wird sie aber bei polymeren Fasern 8 verwendet, die gemäß Fig. 3 beispielsweise wie folgt hergestellt und beschichtet werden:

Eine Vorform V aus polymerem Material ist in einer nur schematisch angedeuteten Halterung 10 angeordnet. Sie wird an ihrem unteren Ende entsprechend den Pfeilen 11 und 12 erwärmt und dadurch in einen fließfähigen Zustand gebracht. Während des Ablaufs des Verfahrens wird die Vorform V in Richtung des Pfeiles 13 bewegt. An dem erweichten Ende der Vorform V bildet sich zunächst eine Art Tropfen, an dem zur Erzeugung der Faser 8 in Richtung des Pfeiles 13 gezogen wird. Die Faser 8 wird nach ausreichender Abkühlung an der Düse 7 einer in ihrem Verlauf angeordneten Anlage A gemäß Fig. 1 entlang gezogen und dabei mit der Schicht 9 aus einem Fluorpolymer versehen. Die beschichtete Faser 8 kann auf eine Spule 14 aufgewickelt werden.

Wenn die Schichtdicke der Schicht 9 nach einmaligem Durchlauf durch die Anlage A nicht ausreicht, kann die Faser 8 nach Beendigung des Ziehvorgangs ein zweites Mal oder noch öfter durch dieselbe gezogen werden. Es könnte auch mindestens eine weitere Anlage A eingesetzt werden.

Die anhand von Fig. 3 erläuterte vertikale Arbeitsweise kann auch durch eine entsprechend angepaßte, horizontale Arbeitsweise ersetzt werden.

## Patentansprüche

1. Verfahren zum Beschichten eines langgestreckten Formkörpers aus polymerem Material, der zur Führung von Licht in Form optischer Signale vorgesehen ist, mit welchem um den Formkörper herum eine Schicht aus polymerem Material mit gegenüber dem Formkörper niedrigerem Brechungsindex angebracht wird, **dadurch gekennzeichnet,**
- **daß** der Formkörper (8) in einer Beschichtungsanlage (A) mit mindestens einer Kammer (1) beschichtet wird, welcher ein halogenhaltiges Gas (4) bzw. Gasgemisch zugeführt wird,
- **daß** das halogenhaltige Gas (4) bzw. Gasgemisch in der Kammer (1) unter der Einwirkung von Mikrowellen (5) in ein Plasma (6) umgewandelt und durch eine Düse (7) aus der Kammer (1) herausgeleitet wird und
- **daß** der Formkörper (8) über seine ganze Länge mindestens einmal im Bereich der Düse (7) bzw. des aus derselben austretenden Plasmas (6) an der Beschichtungsanlage (A) entlang bewegt und dabei mit einer durch das Auftreffen des Plasmas (6) erzeugten Schicht (9) aus einem halogenhaltigen Polymer versehen wird.

2. Verfahren nach Anspruch 1, **dadurch gekennzeichnet, daß** eine Beschichtungsanlage (A) mit einer ringförmigen Düse (7) verwendet wird, durch welche der Formkörper (8) hindurch bewegt wird.

3. Verfahren nach Anspruch 1 oder 2, **dadurch gekennzeichnet, daß** der Beschichtungsanlage (A) ein fluoriertes Gas (4) bzw. Gasgemisch zugeführt wird.
